# EUROPÄISCHE PATENTANMELDUNG

(11) **EP 1 733 601 A1**
(43) Veröffentlichungstag der Anmeldung: **20.12.2006**
(21) Anmeldenummer: 06011890.8
(22) Anmeldetag: 09.06.2006
(51) Int. Cl.: A01B 49/06, A01B 29/00, A01C 7/00

(54) **Auf eine Bodenwalze aufgesattelte und einen Rahmen aufweisende Sämaschine**

(30) Priorität: 17.06.2005 DE 102005028030
(71) Anmelder: Amazonen-Werke H. Dreyer GmbH & Co. KG, 49205 Hasbergen (DE)
(72) Erfinder: Thielicke, Renè, 04420 Markranstädt (DE); Brook, Gebhard, 49429 Visbek (DE); Steen, Rüdiger, 27798 Hude (DE)

(57) **Zusammenfassung**

Auf eine Bodenwalze (1) aufgesattelte und einen Rahmen (2) aufweisende Sämaschine (3) mit Vorratsbehälter (4), Dosier (7)- und Ausbringelementen (8) und einem hinter der Bodenwalze und den Ausbringelementen angeordneten Striegelzinken (9) aufweisenden Saatstriegel, wobei der Saatstriegel über ein Verbindungsgestänge (10) an dem Rahmen der Sämaschine angeordnet ist, wobei der Rahmen mit zumindest einem hinteren (5) und zumindest einem vorderen (6) Befestigungselement auf der Bodenwalze befestigt ist. Um eine einfachere preiswerte Verstellung des Striegels zum Boden zu erreichen, ist vorgesehen, dass das hintere Befestigungselement (5) als Gelenkelement und das vordere Befestigungselement (6) als Einstellelement ausgebildet ist, so dass durch Verschwenken des Rahmens (2) der Sämaschine mit dem daran angeordneten Striegel der Striegel zum Boden einstellbar und der Rahmen zur Bodenwalze durch das Einstellelement einstellbar und in seiner Position zur Bodenwalze festlegbar ist.

## Beschreibung

Die Erfindung betrifft eine auf eine Bodenwalze aufgesattelte und einen Rahmen aufweisende Sämaschine gemäß des Oberbegriffes des Patentanspruches 1.

Derartige Sämaschinen sind bekannt. Auf der Rückseite dieser Sämaschinen ist ein Saatstriegel angeordnet, der über ein Verbindungsgestänge am Rahmen der Sämaschine angeordnet ist. Dieses Verbindungsgestänge weist Einstellelemente auf, um die Einstellung des Striegels zum Boden zu verändern bzw. einen entsprechenden Federdruck in Richtung des Striegels einzustellen.

Diese Einstellung ist relativ aufwendig und kostenintensiv, weil das Verbindungsgestänge verstellbar ausgebildet werden muss.

Der Erfindung liegt die Aufgabe zugrunde, eine einfachere preiswerte Verstellung des Striegels zum Boden zu erreichen.

Diese Aufgabe wird erfindungsgemäß dadurch gelöst, dass das hintere Befestigungselement als Gelenkelement und das vordere Befestigungselement als Einstellelement ausgebildet ist, so dass durch Verschwenken des Rahmens der Sämaschine mit dem daran angeordneten Striegel der Striegel zum Boden einstellbar und der Rahmen zur Bodenwalze durch das Einstellelement einstellbar und in seiner Position zur Bodenwalze festlegbar ist. Infolge dieser Maßnahmen wird das verstellbar ausgebildete Befestigungselement des Rahmens der Sämaschinen auf der Bodenwalze dazu benutzt, durch Verschwenken der Sämaschine den Saatstriegel ebenfalls mit zu verschwenken und hierdurch den Saatstriegel einzustellen.

Eine einfache Anordnung des Saatstriegels an dem Rahmen der Sämaschine wird dadurch erreichen, dass das Verbindungsgestänge an dem Rahmen mittels Verbindungselementen starr angeordnet ist. Das Einstellelement kann als längenveränderbare Einstellschraube, Spannschloss oder als motorisches Einstellelement, beispielsweise als doppelt wirkender Hydraulikzylinder, elektrischer Stellmotor etc. ausgebildet sein. Auch ist es möglich, dass das Einstellelement als Exzenterbolzen oder als mit einem Bolzen zusammenwirkende Lochreihe ausgebildet ist.

Ein einfacher Antrieb der Dosierelemente der Sämaschine wird dadurch erreicht, dass an dem Rahmen der Sämaschine ein auf dem Boden abrollendes Antriebsrad für die Dosierelemente der Sämaschine angeordnet ist.

Bei den Ausführungen, bei denen das Einstellelement als motorisches Einstellelement ausgebildet ist, ist es möglich, während des Transportes oder beim Wendevorgang am Feldende die Sämaschine mit dem Striegel und dem Antriebsrad derart zu verschwenken, dass die Sämaschine mit dem Striegel und den Antriebsrad um die quer zur Fahrtrichtung verlaufende Drehachse nach vorn verschwenkt wird, so dass gleichzeitig der Striegel und das Antriebsrad und evtl. an der Sämaschine befestigte Säschare nach oben verschwenkt werden, um eine größere Bodenfreiheit zu erhalten.

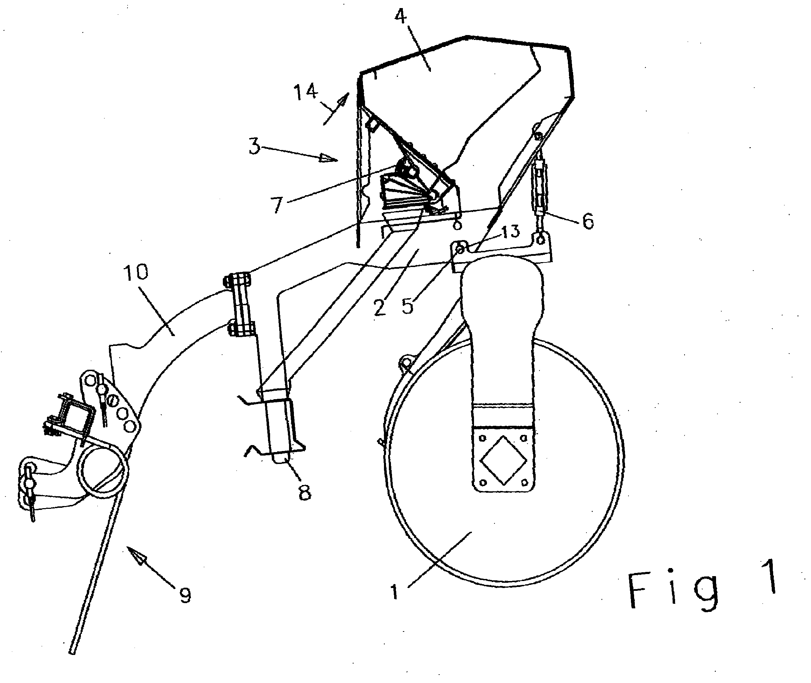

Weitere Einzelheiten der Erfindung sind der Beispielsbeschreibung und den Zeichnungen zu entnehmen. Hierbei zeigen
- Fig. 1: die auf eine Bodenwalze aufgesattelte Sämaschine in Seitenansicht und Prinzipdarstellung, wobei der Übersichtlichkeit halber das Antriebsrad nicht eingezeichnet ist und

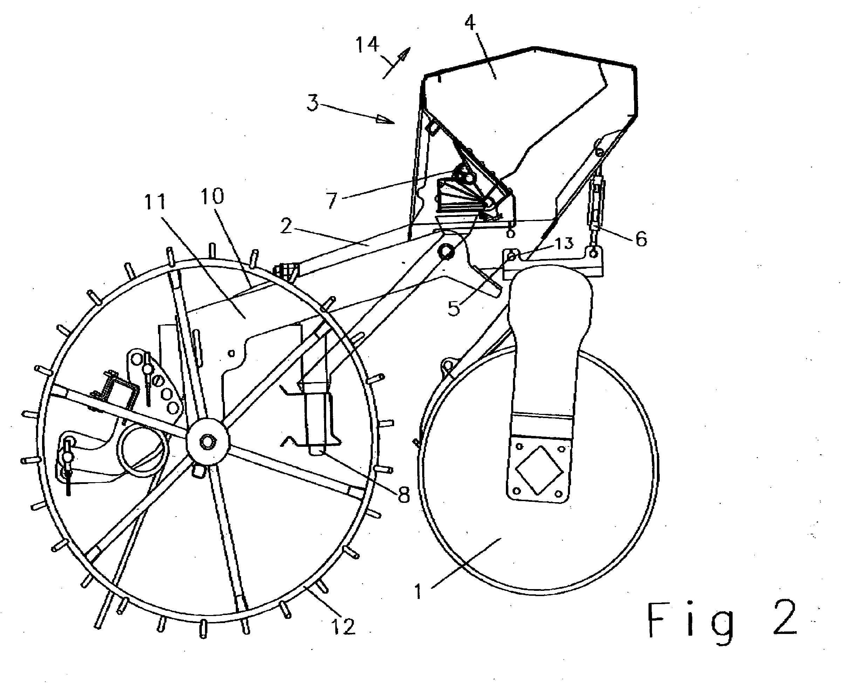

- Fig. 2: die auf die Bodenwalze aufgesattelte Sämaschine gemäß Fig. 1, wobei jedoch das Antriebsrad für die Dosierelemente eingezeichnet ist.

Auf der Bodenwalze 1 ist die einen Rahmen 2 aufweisende Sämaschine 3 mit Vorratsbehälter 4 mittels des hinteren Kupplungselementes 5 und des vorderen einstellbaren Kupplungselementes 6 angeordnet. Auf der Vorderseite der Bodenwalze 1 bzw. der Sämaschine 3 sind nicht dargestellte Kupplungselemente zum Anbau der Maschine an das Dreipunktkuppelgestänge eines Schleppers oder einer vorlaufenden Bodenbearbeitungsmaschine angeordnet. Die Sämaschine 3 weist an dem unteren hinteren Bereich des Vorratsbehälters 4 angeordnete Dosierelemente 7 auf, an die sich als Saatleitungsrohre ausgebildete Ausbringelemente 8 anschließen. Die Saatausbringelemente 8 münden hinter der Bodenwalze 1 aus. An der Sämaschine 3 ist hinter der Bodenwalze 1 und den Ausbringelementen 8 der Striegelzinken 9 aufweisende Saatstriegel angeordnet. Das Verbindungsgestänge 10 des Striegels 9 ist an dem Rahmen 2 der Sämaschine 3 mittels Verbindungselementen starr angeordnet. An dem Rahmen 2 der Sämaschine 3 ist auf der einen Seite mittels des Tragarmes 11 das drehbar gelagerte Antriebsrad 12 angeordnet, welches über nicht dargestellte Übertragungselemente und Einstellelemente in einstellbarer Weise die Dosierorgane 7 antreibt, so dass in einstellbarer Weise das sich im Vorratsbehälter 4 befindliche Material über die Säleitungen den Ausbringelementen 8 zugeleitet wird und auf den Boden bzw. in den Boden eingebracht wird.

Der Rahmen 2 der Sämaschine 3 ist mittels des hinteren Befestigungselementes 5, welches als Schwenkgelenk ausgebildet sind und dem vorderen Befestigungselement 6, welches als Einstellelement, im Ausführungsbeispiel als längenveränderbare Einstellschraube bzw. Spannschloss ausgebildet ist.

Durch die Längenveränderung des Einstellelementes 6 kann der Rahmen 2 der Sämaschine 3 um die durch die Gelenkelemente 5 verlaufende Schwenkachse 13 verschwenkt werden. Durch das Verschwenken des Rahmens 2 der Sämaschine 3 mit dem daran angeordneten Striegel 9, ist der Striegel 9 gegenüber dem Boden einstellbar. Der Rahmen 2 der Sämaschine 3 ist zur Bodenwalze 1 durch das Einstellelement 6 somit einstellbar und in seiner Position zur Bodenwalze 1 festlegbar.

An Stelle des längenveränderbaren Einstellschraube 6 oder Spannschlosses kann das Einstellelement 6 auch als Exzenterbolzen und/oder als Einstellelement als mit einem Bolzen zusammenwirkende Lochreihe ausgebildet sein.

In nicht dargestellter Weise ist es auch möglich, das längenveränderbare Einstellelement als motorisches Einstellelement beispielsweise als doppelwirkender Hydraulikzylinder oder als elektrischer Stellmotor auszubilden. In diesem Falle kann über das motorische Einstellelement der Rahmen 2 der Sämaschine 3 mit dem daran angeordneten Striegel 9 und dem an dem Tragarm 11 befestigten Antriebsrad 12 verschwenkt werden und so beispielsweise durch Verschwenken der Sämaschine 3 in Pfeilrichtung 14 um die Gelenkachse 13 kann der Striegel 9 und das Antriebsrad 12 beim Wenden am Feldende zusätzlich zum Anheben der Maschine nach vorn verschwenkt werden. Hierdurch wird ein größerer Abstand des Antriebsrades 12 und der Striegelelemente 9 und evtl. am Rahmen 2 der Sämaschine 3 angeordneter Säschare zum Boden erreicht, so dass die Beschädigungsgefahr beim Wenden am Feldende weiter reduziert wird.

## Patentansprüche

1. Auf eine Bodenwalze aufgesattelte und einen Rahmen aufweisende Sämaschine mit Vorratsbehälter, Dosier- und Ausbringelementen und einem hinter der Bodenwalze und den Ausbringelementen angeordneten Striegelzinken aufweisenden Saatstriegel, wobei der Saatstriegel über ein Verbindungsgestänge an dem Rahmen der Sämaschine angeordnet ist, wobei der Rahmen mit zumindest einem hinteren und zumindest einem vorderen Befestigungselement auf der Bodenwalze befestigt ist, **dadurch gekennzeichnet, dass** das hintere Befestigungselement (5) als Gelenkelement und das vordere Befestigungselement (6) als Einstellelement ausgebildet ist, so dass durch Verschwenken des Rahmens (2) der Sämaschine (3) mit dem daran angeordneten Striegel (9) der Striegel (9) zum Boden einstellbar und der Rahmen zur Bodenwalze (1) durch das Einstellelement (6) einstellbar und in seiner Position zur Bodenwalze (2) festlegbar ist.

2. Sämaschine nach Anspruch 1, **dadurch gekennzeichnet, dass** das Verbindungsgestänge (10) an dem Rahmen (2) mittels Verbindungselementen starr angeordnet ist.

3. Sämaschine nach Anspruch 1, **dadurch gekennzeichnet, dass** das Einstellelement (6) als längenveränderbare Einstellschraube oder Spannschloss ausgebildet ist.

4. Sämaschine nach Anspruch 1, **dadurch gekennzeichnet, dass** das Einstellelement als motorisches Einstellelement, beispielsweise als doppelwirkender Hydraulikzylinder, elektrischer Stellmotor etc. ausgebildet ist.

5. Sämaschine nach Anspruch 1, **dadurch gekennzeichnet, dass** das Einstellelement als Exzenterbolzen ausgebildet ist.

6. Sämaschine nach Anspruch 1, **dadurch gekennzeichnet, dass** das Einstellelement als mit einem Bolzen zusammenwirkende Lochreihe ausgebildet ist.

7. Sämaschine nach einem oder mehreren der vorgenannten Ansprüche, **dadurch gekennzeichnet, dass** an dem Rahmen (2) der Sämaschine (3) ein auf dem Boden abrollendes Antriebsrad (12) für die Dosierelemente (7) der Sämaschine (3) angeordnet ist.
